# EUROPEAN PATENT APPLICATION

(11) **EP 1 102 479 A1**
(43) Date of publication of application: **23.05.2001**
(21) Application number: 00908018.5
(22) Date of filing: 10.03.2000
(51) Int. Cl.: H04N 5/225

(54) **THROWAWAY DIGITAL CAMERA**

(30) Priority: 13.05.1999 JP 13297399
(71) Applicant: SBU Consultant Company, Tokyo 162-0801 (JP)
(72) Inventor: TAKEMOTO, Tarou SBU Consultant Company, Shinjyuku-ku Tokyo 162-0801 (JP)
(74) Representative: Wolff, Michael, Dipl.-Phys.
(86) International application number: JP0001488
(87) International publication number: WO0070866

(57) **Abstract**

A throwaway digital camera suited to a recycling system. The throwaway digital camera (1) includes a unit substrate (8), on which are mounted expensive parts, including a CCD device (83a) as imaging means, RAM (83b) as storage means, infrared emitting/receiving photodiodes (86c, 86d) as data transfer means, and CPU (83e) and ROM (83f) as control means. The unit substrate (8) and a power supply battery (9) for supplying power to all the means described above are housed in a container (2) from which they can be collected separately. Expensive parts can be easily collected by removing the unit substrate (8) separately from the battery (9) as a source of environmental pollution.

## Description

### Technical Field

The present invention relates to a throwaway digital camera and, in particular, one that is suitable for recycling expensive parts.

### Background Art

A so-called throwaway camera has a film and a camera integrated and is also referred to as a film having a lens. Such a camera has such a structure that an image pick-up lens having a fixed focus, a film feeding mechanism supported on a rotating member, a manual film winding mechanism, a blade type shutter, a manual press-down type shutter button, a counter for displaying the number of frames used of a film, a direct-view type finder and a film cartridge are incorporated in a body portion formed of plastics.

In recent years, moreover, there has widely been used a digital camera in which image of an object is picked up by an image pick-up element such as a CCD and image data which is a result of the image pick-up are converted digitally and are then recorded in a recording medium such as a memory card.

Although the conventional throwaway camera described above has all important components incorporated as a camera in the camera body portion formed of plastics, many parts are structural and are therefore unsuitable for recycling specification for newly constituting a camera by reusing after throwaway.

Moreover, some conventional digital cameras comprising a monitor device of a liquid crystal display have been put on the market. Therefore, the workmanship of the picked up image can be confirmed on the spot and unsatisfied image data can be erased on the spot or can be picked up again. Thus, such a camera have not been constituted based on the concept of a throwaway camera.

The present invention has an object to provide a digital camera which can be thrown away and is suitable for building a recycling system.

### Disclosure of the Invention

In order to solve the problems described above, the present invention has the following structure. More specifically, a throwaway digital camera of the present invention is characterized by providing an imaging means for picking up an image of an object, storage means for storing the image picked up by the imaging means and control means for controlling these means on a unit substrate, and the unit substrate and a power supply battery for supplying power to each of the means are accommodated in a container from which they can be separated and collected. In addition to each of the means described above, moreover, there may be provided data transfer means for transferring images stored in the storage means to an external printer or the like.

Accordingly, expensive parts such as the imaging means, the storage means, the control means and the data transfer means are disposed integrally on the unit substrate, and furthermore, the unit substrate and the power supply battery for supplying power to each of the means described above are housed in the container from which they can be collected separately. Therefore, the expensive parts can be easily collected by sorting out the unit substrate from the power supply battery as a source of environmental pollution.

### Brief description of the Drawings

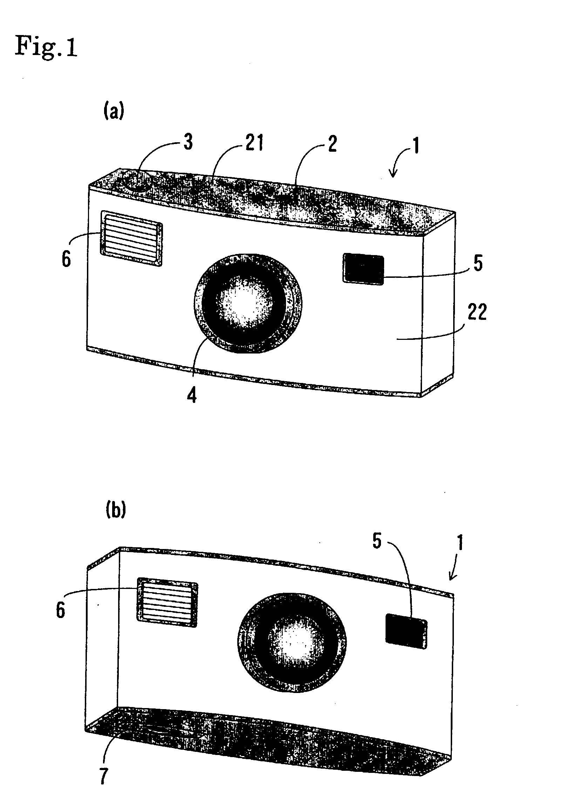

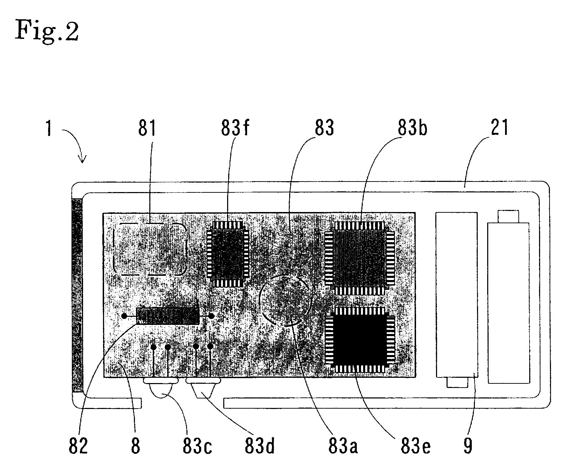

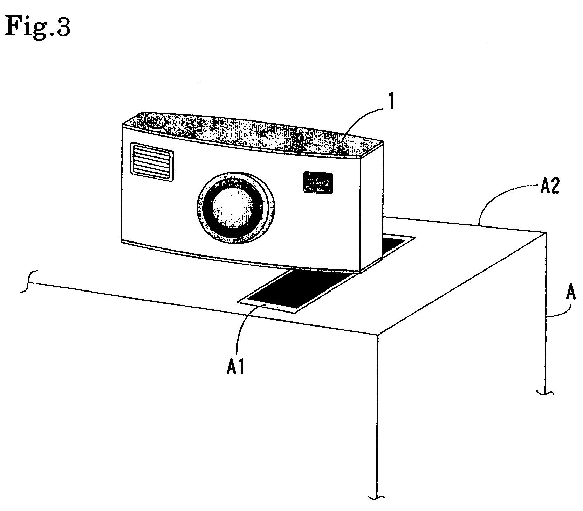

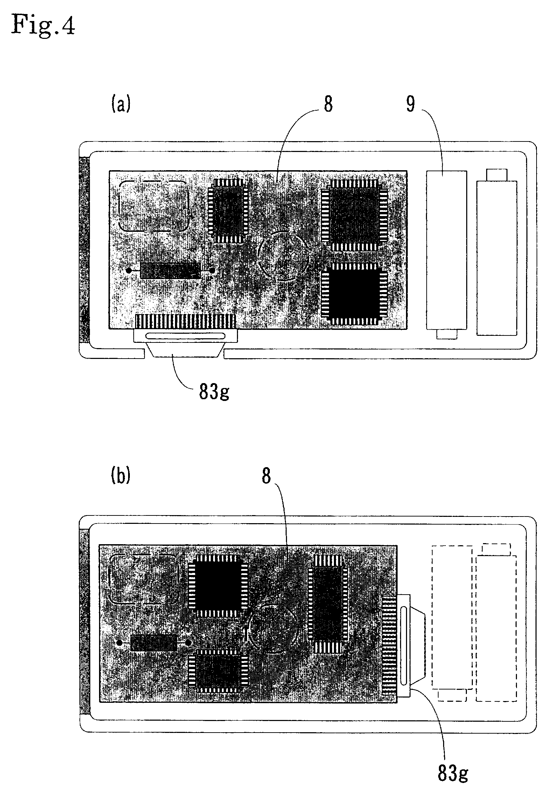

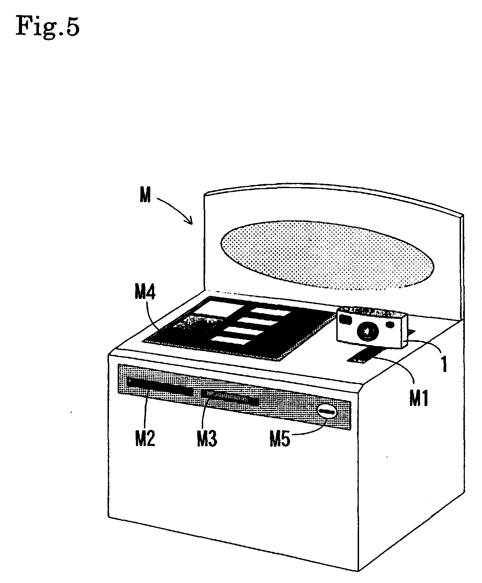

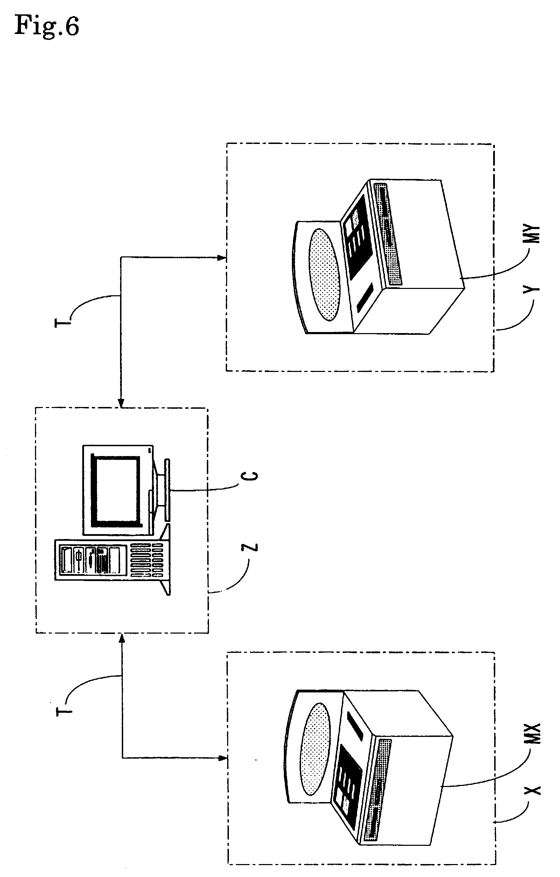

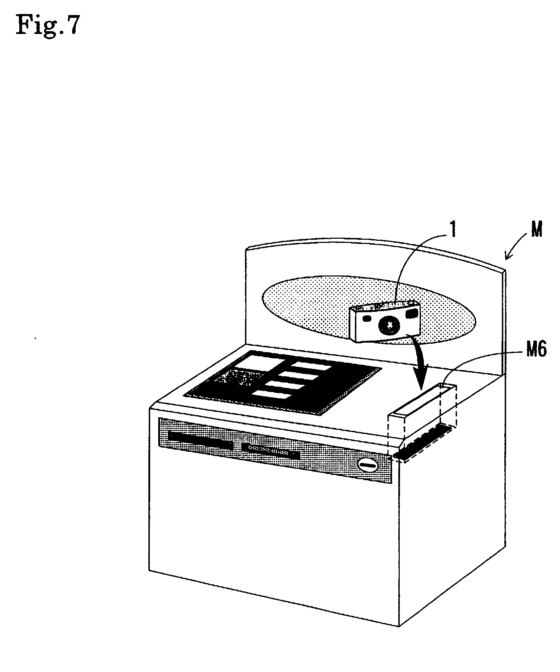

Fig. 1 is a perspective view showing the appearance of a throwaway digital camera, Fig. 2 is a view schematically showing the inner portion of the throwaway digital camera, and Fig. 3 is a view showing a state in which image data are transferred to outside. Moreover, Fig. 4 is a view schematically showing the inner portion of another embodiment, and Fig. 5 is a perspective view showing the appearance of a multimedia terminal. Furthermore, Fig. 6 is a view showing a structure of a rental system of the digital camera, and Fig. 7 is a perspective view showing the appearance of another multimedia terminal.

### Best Mode for Carrying Out the Invention

An embodiment of the present invention will be described below with reference to the drawings.

Fig. 1 is a perspective view showing the appearance of a throwaway digital camera 1 (which will be hereinafter referred to as a digital camera 1) according to the present invention. As shown in this figure, the digital camera 1 has an outer shell constituted by a container 2. A shutter switch 3 is provided on the top surface of the container 2, a lens portion 4, a finder hole 5 and a stroboscopic hole 6 are provided in the front portion, and a transmitting and receiving hole 7 is provided on the bottom surface. Fig. 1(a) is a view showing the digital camera 1 seen from above and Fig. 1(b) is a view showing the digital camera 1 seen from below.

The container 2 includes a base portion 21 formed of plastics and a paper cover 22 covering the base portion 21,and the paper cover 22 has a hole opened corresponding to the lens portion 4 or the like. The paper cover 22 can enhance an interest in the digital camera 1 by printing a design, and can be removed or exchanged depending on such necessity.

Fig. 2 is a view typically showing a state in which the paper cover 22 is broken and a rear cover (not shown) provided on the back face side of the base portion 21 is then removed. As shown in this figure, the inside of the digital camera 1 is provided with a unit substrate 8 which can be removed from the base portion 21 and a battery 9 to be a power source which can be removed as well. The unit substrate 8 is provided with a stroboscopic light emitting member 81 for generating light for image pick-up, a capacitor 82 for storing electricity necessary for the light emission of the stroboscopic light emitting member 81 and an electronic circuit 83.

The electronic circuit 83 includes a CCD element 83a to be imaging means which is provided on the back face side of the unit substrate 8 and serves to pick up an image of an object, a RAM 83 to be storage means for storing image data picked up by the imaging means, infrared light emitting and receiving diodes 83c and 83d to be data transfer means for transferring the image data stored by the storage means to outside, and control means having a CPU 83e for controlling each of the means and a ROM 83f storing a control program.

Description will be given to the procedure for picking up an image of an object and printing the picked up image through a printer by the digital camera 1 thus constituted.

First of all, a user moves the digital camera 1 to be turned toward the object, and presses down the shutter button 3. When the shutter button 3 is pressed down, light transmitted through the lens portion 4 is caught by the CCD element 83a and is converted into image data and the image data are stored in the RAM 83b.

As shown in Fig. 3, next, the user puts the digital camera 1 such that a reading portion A1 of the printer A, and presses down a reading switch (not shown) on the printer. When the reading switch is pressed down, a data request signal is transmitted from the reading portion A1 of the printer A toward the transmitting and receiving hole 7.

Furthermore, the data request signal thus transmitted is received by the light receiving diode 83d through the transmitting and receiving hole 7 and is transmitted to the CPU 83e. The CPU 83e reads the image data stored in the RAM 83b on receiving the data request signal, and flashes the light emitting diode 83c based on the read image data and transmits the image data.

Finally, the image data transmitted from the light emitting diode are received by the reading portion A1 of the printer and are stored in a memory (not shown) of the printer. When the transfer of the image data is completed, the completion is displayed on a display unit (not shown) of the printer A. When the user presses down a print switch (not shown), the image data will be printed out.

Thus, the digital camera 1 records the image data in the storage means differently from the throwaway camera using a film. Therefore, photographing and printing can be repeated without exchanging the film. However, the digital camera 1 might be broken or damaged as it is used. In such a case, the digital camera 1 can be exactly discarded. Since the digital camera 1 includes the unit substrate 8 on which expensive parts are mounted and the battery 9 which may be a source of environmental pollution, it is recycled in the following procedure.

First of all, the paper cover 22 is removed by breaking to open the rear cover provided on the back face side of the base portion 21. Next, the unit substrate 8 and the battery 9 are removed and each portion is separated. Finally, the base portion 21 is molten and is recycled as recycled plastics, the paper cover 22 is recycled as a recycled paper, the unit substrate 8 is reused as it is, and the battery 9 is recycled according to the amount of residual power or is recycled as a battery material. In the case in which only the paper cover 22 is broken, it is sufficient that the paper cover 22 is exchanged for recycling.

In the digital camera 1, thus, the unit substrate 8 and the battery 9 can be removed from the container 2. Therefore, the expensive unit substrate 8 and the battery 9 to be a source of environmental pollution can be sorted and recycled easily.

While infrared rays are used for data transfer between the digital camera 1 and the printer A in the embodiment described above, the data transfer can be carried out by other means.

As shown in Fig. 4, for example, a connector 83g may be used, and a connecting portion of the connector 83g may be turned toward the bottom face side of the digital camera 1 as shown in Fig. 4(a) and may be turned toward the battery 9 side as shown in Fig. 4(b). By using the connector 83g, the image data can be transferred more reliably at a high speed. In the case in which the connecting portion of the connector 83g is provided to be turned toward the bottom face side of the digital camera 1, the data transfer can be carried out without breaking the paper cover 22. In the case in which the connecting portion of the connector 83g is provided to be turned toward the battery 9 side of the digital camera 1, the battery 9 should be removed to expose the connecting portion as shown in Fig. 4(b). Therefore, the connecting portion can be prevented from being damaged.

Although the paper cover 22 is used in the embodiment described above, a shrink wrap may be used. By using the shrink wrap, the lens portion 4 can be protected from an external shock until the digital camera 1 is used or recycled. In order to more reduce a load to be applied to a natural environment, a secondary battery such as a nickel cadmium cell may be used for the battery 9. In order to recycle the digital camera 1 more efficiently, the unit substrate 8 and the battery 9 may be integrated.

While the data recorded in the digital camera 1 are printed out by the printer A in the embodiment described above. furthermore, the image data can also be utilized in other ways Such as by a multimedia terminal M or can be incorporated in a part of a rental system for utilization.

Fig. 5 is a perspective view showing the appearance of the multimedia terminal M. As shown in this figure, the multimedia terminal M includes a reading portion M1 for mounting the digital camera 1 to transfer image data, a printer M2 for printing the image data out, a media drive M3 for storing the image data in various media such as a floppy disk, a touch panel M4 for the user to operate the multimedia terminal M by an interactive method, and a cash throwing slot M5 for putting a service fee therein. A method of using the multimedia terminal M thus constituted will be described below.

First of all, when the user mounts the digital camera 1 on the reading portion M1, the multimedia terminal M reduces and displays the image data stored in the digital camera 1 on the touch panel M4, and requests a selection of the image data to be processed.

Next, when the user selects specific image data, the multimedia terminal M gives a request for interactively setting a method of utilizing the image data by using the touch panel M4 in which the image data stored in the digital camera 1 are printed or stored in various media or a method of operating the image data such as brightness correction or decoration application.

Finally, when the user completes a setting work, the multimedia terminal M gives a request for paying a fee. When the user pays the fee through the cash throwing slot M5, the multimedia terminal M prints out the image data in accordance with the set contents.

Such a multimedia terminal M is provided in a convenience store, for example, a person which does not have the printer A can utilize the digital camera 1.

Moreover, the rental system of the digital camera 1 can be built by a combination of the multimedia terminal M with the digital camera 1.

Fig. 6 is a schematic view showing such a rental system. The rental system is constituted by the digital camera 1, multimedia terminals MX and MY provided in stores X and Y respectively, and a computer C connected to the multimedia terminal M through a communication line T and put in a management head office Z.

When the user rents the digital camera 1 and pays a rental fee in the store X, a serial number and the like of the digital camera 1 is notified to the computer C through the multimedia terminal MX. The rental fee includes a fee (print right charge) for printing a constant number of, for example, 24 image data photographed by the digital camera 1.

When the serial number of the digital camera 1 is received in the computer C, the print charge of the digital camera 1 is set to be an initial value, for example, a fee for 24 sheets and is stored.

In the case in which the user prints the image photographed by the digital camera 1, he (or she) can bring the digital camera 1 to the store X or Y to carry out printing through the multimedia terminal MX or MY. When the printing is carried out, the number of prints and the kind of a multimedia terminal are registered in the computer C through the communication line T.

In the case in which the user carries out the printing in the store X, the print charge which has already been paid is utilized. In the case in which the user carries out the printing in the store Y, however, the store Y should execute the printing without receiving the payment. Therefore, a loss is caused for each printing. In order to eliminate this drawback, marginal profits of the stores are calculated based on the record of the computer C and the management head office Z collects an excess from the store (for example, the store X) which gets too much print charge and pays the same excess to the store (for example, the store Y) which has not got the print charge.

Thus, the management head office Z manages the print charge and makes up the difference in the print charge between the stores. Consequently, the rental system can be employed without an unfair feeling between the stores.

In addition, the rental system has the multimedia terminal MX and MY connected to each other through the computer C. Therefore, the image data of the digital camera 1 can be read by the multimedia terminal MX, the image data can be transferred through the computer C and the printing can also be carried out in the multimedia terminal MY. Moreover, if the digital camera 1 is not put on the reading portion M1 but is accommodated in the reading hole M6 provided in the multimedia terminal M in order to carry out the data transfer as shown in Fig. 7, a recovery rate of the digital camera 1 can be increased. Furthermore, it is also possible to employ such a rental system that the computer C does not manage the print charge but manages only the state of the camera which is being rented or not. By using such a rental system, accounting management or the like can easily be carried out so that a fee for managing the rental system can be reduced.

### Industrial Availability

As described above, the throwaway digital camera according to the present invention has such a structure that expensive parts such as imaging means, storage means and control means are provided integrally on a unit substrate and the unit substrate and a power supply battery for supplying power to each of the means are accommodated in a container capable of being separated and collected. Therefore, the throwaway digital camera can be thrown away and is also suitable for building a recycling system.

## Claims

1. A throwaway digital camera in which imaging means for picking up an image of an object, storage means for storing the image picked up by the imaging means and control means for controlling these means are provided on a unit substrate, and the unit substrate and a power supply battery for supplying power to each of the means are accommodated in a container which can be separated and collected.

2. The throwaway digital camera according to claim 1, further comprising data transfer means for transferring the image stored in the storage means to an external printer or the like.
